# EUROPÄISCHE PATENTANMELDUNG

(11) **EP 4 826 286 A2**
(43) Veröffentlichungstag der Anmeldung: **21.10.2026**
(21) Anmeldenummer: 26201895.5
(22) Anmeldetag: 16.08.2019
(51) Int. Cl.: F16M 11/10

(54) **VORRICHTUNG ZUM TRAGEN EINES MONITORS**

(30) Priorität: 16.08.2018 EP 18189325
(62) Dokumentnummer(n) der früheren Anmeldung(en) nach Art. 76 EPÜ: 19753383.9 / 3 837 467
(71) Anmelder: Ondal Medical Systems GmbH, 36088 Hünfeld (DE)
(72) Erfinder: HAPPEL, Jonathan, 36142 Tann (Rhön) (DE)
(74) Vertreter: Maiwald GmbH

(57) **Zusammenfassung**

Die vorliegende Erfindung betrifft eine Vorrichtung (1, 100) zum Tragen eines Monitors (4), bevorzugt einen schwenkbaren Monitorträger, umfassend ein Anbindungselement (21) zum Verbinden mit einem Monitor (4) und ein Stützgestell (20) zum Abstützen der Vorrichtung (1) gegen die Umgebung, wobei das Anbindungselement (21) und das Stützgestell (20) relativ zueinander schwenkbar angeordnet sind, wobei das Stützgestell (20) und das Anbindungselement (21) über ein ungleichmäßig übersetzendes Getriebe zum Bereitstellen der Schwenkbarkeit des Anbindungselements (21) relativ zum Stützgestell (20) schwenkbar miteinander verbunden sind oder das Stützgestell (20) und das Anbindungselement (21) über mindestens ein Drehgelenk (110) zum Bereitstellen der Schwenkbarkeit des Anbindungselements (21) relativ zum Stützgestell (20) schwenkbar miteinander verbunden sind, wobei ein Motor (120), bevorzugt ein Elektromotor, zum Unterstützen der Schwenkbewegung des Anbindungselements (21) relativ zum Stützgestell (20) vorgesehen ist.

## Beschreibung

### Technisches Gebiet

Die vorliegende Erfindung betrifft eine Vorrichtung zum Tragen eines Monitors, insbesondere einen schwenkbaren Monitorträger.

### Stand der Technik

Vorrichtungen zum Tragen eines Monitors, auch "Monitorträger" genannt sind weithin bekannt. Dabei sind Monitorträger mit und ohne Kippfunktion bekannt. Unter "Kippfunktion" wird eine Schwenkbarkeit des Monitors im Raum verstanden.

Um die Schwenkbarkeit des montierten Monitors bereitzustellen, weisen herkömmliche Monitorträger ein Anbindungselement auf, welches gegenüber einem starr mit der Umgebung, beispielsweise einer Decke, einer Wand oder eines Bodens eines Raums, oder mit einem fahrbaren Gestell, verbindbaren Stützgesell verschwenkbar ist, indem das Anbindungselement mit dem Stützgestell über ein Kippgelenk verbunden ist. Das Kippgelenk ist dabei als Drehgelenk mit einer festen Drehachse ausgebildet.

Das "Kippen" des Monitors, beispielsweise um den Monitor an eine Arbeitsposition einer den Monitor zumindest zeitweise nutzenden Person auszurichten und so eine Lesbarkeit des Monitors zu verbessern, wird folglich durch das Schwenken über die feste Drehachse erzielt.

Dabei ist es bekannt, dass bei einem an das Anbindungselement befestigten Monitor das Drehgelenk hinter dem Monitor angeordnet ist. Dies hat den Vorteil, dass der Aufbau eines solchen Monitorträgers einfach ist und dadurch lediglich geringe Herstellkosten bedingt. Aufgrund des Schwenkens um die feste Drehachse erfolgt bei einem Schwenken des Monitors eine Änderung des Höhenniveaus des Schwerpunkts des Monitors. Aufgrund dessen sind die die erforderlichen Bedienkräfte zum Schwenken des Monitors relativ hoch.

Um die hohen Bedienkräfte zu verringern, sind Monitorträger bekannt, welche zur Unterstützung eine Feder aufweisen. Die Feder wirkt dabei entgegen der Schwerkraft, so dass die resultierende aufzubringende Bedienkraft verringert ist. Das Vorsehen der Feder verteuert die Vorrichtung. Zudem ist es technisch aufwendig, die Federkraft auf das Gewicht des Monitors anzupassen. Schließlich "drückt" die Feder auch nicht in jeder Winkellage mit einer Gegenkraft nach oben, wie die Schwerkraft den Monitor nach unten drückt, da die durch die Feder erzeugte Kraft proportional zu ihrem Federweg ist und zudem von der Position von Anbindungselement, Stützgestell und Feder relativ zueinander abhängig ist.

Ferner ist es bekannt, die Bedienkraft dadurch zu verringern, dass beim Schwenken des Monitors entgegen der Schwerkraft die Reibung im Drehgelenk entkoppelt wird. Die Reibung ist lediglich erforderlich, um den Monitor in Position zu halten, mithin damit der Monitor nicht eigenständig nach unten kippt. Für das Nach-Oben-Kippen, mithin entgegen der Schwerkraft, ist die Reibung aus funktionaler Sicht hingegen nicht erforderlich. Zu diesem Zweck können richtungsbetätigte Kupplungen vorgesehen sein, über welche die Reibung beim Schwenken entgegen der Schwerkraft entkoppelt werden kann. Dies hat den Vorteil, dass die Reibungskraft und mithin die Bedienkraft beim Schwenken entgegen der Schwerkraft reduziert wird. Durch das Vorsehen der Kupplungen weist ein solcher Monitorhalter jedoch einen komplizierten Aufbau auf, gleichzeitig ist er naturgemäß aufgrund seiner technisch komplexen Bauteile in der Herstellung kostenintensiv.

Monitorhalter sind beispielsweise aus der US 2008/0054133 A1 oder der US 2006/0175499 A1 bekannt.

Ferner ist es bekannt, das Drehgelenk seitlich des Monitors vorzusehen. Hierzu weist das Anbindungselement einen seitlich auskragenden Ausleger auf, der seitlich des Bauraums des zu tragenden Monitors über das Drehgelenk mit dem Stützgestell verbunden ist. Bei dieser Ausführungsform können im Vergleich zu Monitorträgern mit einem hinter dem Monitor vorgesehenen Drehgelenk die erforderlichen Bedienkräfte reduziert werden, insbesondere dann, wenn die Drehachse des Drehgelenks im Bereich des Schwerpunkts des Monitors liegt. Dadurch kann eine Höhenänderung des Schwerpunkts im Wesentlichen vermieden werden. Jedoch sind solche Monitorträger aufgrund des auskragenden Auslegers und der dadurch zusätzlich auf das Drehlager und das Stützgestell wirkenden Momente teuer und schwer. Schließlich ist die Größe des Monitors, der durch den Monitorträger gehalten werden soll, durch die Länge des Auslegers begrenzt. Soll ein vorhandenerer Monitor beispielsweise durch einen Monitor mit größerer Bildschirmdiagonale ersetzt werden, kann es folglich sogar notwendig werden, auch den Monitorträger austauschen zu müssen.

### Darstellung der Erfindung

Ausgehend von dem bekannten Stand der Technik ist es eine Aufgabe der vorliegenden Erfindung, eine verbesserte Vorrichtung zum Tragen eines Monitors, insbesondere einen schwenkbaren Monitorträger, bereitzustellen. Insbesondere ist es eine Aufgabe der vorliegenden Erfindung, eine Vorrichtung zum Tragen eines Monitors mit verminderter benötigter Betätigungskraft durch einen Bediener beim Schwenken des getragenen Monitors bereitzustellen.

Die Aufgabe wird durch eine Vorrichtung zum Tragen eines Monitors, bevorzugt einen schwenkbaren Monitorträger, mit den Merkmalen des Anspruchs 1 gelöst. Vorteilhafte Weiterbildungen ergeben sich aus den Unteransprüchen, der Beschreibung und den Figuren.

Entsprechend wird erfindungsgemäß eine Vorrichtung zum Tragen eines Monitors, bevorzugt ein schwenkbarer Monitorträger, bereitgestellt, umfassend ein Anbindungselement zum Verbinden mit einem Monitor und ein Stützgestell zum Abstützen der Vorrichtung gegen die Umgebung, wobei das Anbindungselement und das Stützgestell relativ zueinander schwenkbar angeordnet sind. Fernerhin sind das Stützgestell und das Anbindungselement über ein ungleichmäßig übersetzendes Getriebe zum Bereitstellen der Schwenkbarkeit des Anbindungselements relativ zum Stützgestell schwenkbar miteinander verbunden.

Dadurch, dass das Stützgestell und das Anbindungselement über ein ungleichmäßig übersetzendes Getriebe zum Bereitstellen der Schwenkbarkeit des Anbindungselements relativ zum Stützgestell schwenkbar miteinander verbunden sind, kann ein einfaches Schwenken eines an dem Anbindungselement befestigten Monitors ermöglicht werden. Zudem wird es dadurch möglich, den als ungleichmäßig übersetzende Getriebe realisierten Kippmechanismus für den Monitor hinter dem Monitor zu platzieren, wodurch ein einfacher und kostengünstiger Aufbau dargestellt werden kann. Es müssen keine auskragenden Ausleger vorgesehen werden, und es sind auch keine zusätzlichen Momente basierend aus einem Hebelarm des Auslegers durch den Monitorträger aufzunehmen. Vielmehr kann das ungleichmäßig übersetzende Getriebe nahe am Schwerpunkt des Monitors hinter diesem funktionsgesteuert positioniert werden. Insbesondere im Vergleich zu herkömmlichen Vorrichtungen mit seitlich angeordnetem Drehgelenk können die Herstellkosten und die Komplexität des Aufbaus gering gehalten werden.

Zudem ist es dadurch möglich, dass bei einem Schwenken des an dem Anbindungselement montierten Monitors im Wesentlichen keine bzw. nur in geringem Ausmaß Höhenenergie in das System aus Monitor und Vorrichtung eingebracht werden muss. Mit anderen Worten kann der Monitor bezüglich seines Schwerpunkts im Wesentlichen auf einem in etwa gleichen Höhenniveau gehalten werden. Dadurch ergeben sich geringe Bedienkräfte beim Schwenken. Dies ist insbesondere vorteilhaft gegenüber herkömmlichen Vorrichtungen mit hinter dem Monitor angeordneten Drehgelenken.

Unter dem Begriff "ungleichmäßig übersetzende Getriebe" kennt der Fachmann Getriebe, welche eine ungleichförmige Übersetzung aufweisen. Mit anderen Worten ist bei diesen Getrieben die Übersetzung zwischen einem Eingangsglied des Getriebes und einem Ausgangsglied des Getriebes nicht konstant.

Einer weiteren bevorzugten Ausführungsform entsprechend kann das ungleichmäßig übersetzende Getriebe derart ausgebildet sein, dass ein vorgegebener, relativ zu dem Anbindungselement in einer festen Position gehaltener Punkt bei einem Schwenken des Anbindungselements über das ungleichmäßig übersetzende Getriebe relativ zum Stützgestell innerhalb eines vorgegebenen Schwenkwinkels entlang einer vorgegebenen Weglänge im Bereich einer horizontalen Ebene führbar ist. Mit anderen Worten kann das ungleichmäßig übersetzende Getriebe derart ausgebildet sein, dass zumindest innerhalb eines vorgegebenen Schwenkwinkels eine Geradführung des Punktes entlang einer vorgegebenen Weglänge bereitgestellt ist.

Zu diesem Zweck kann das Getriebe beispielsweise eine oder mehrere Drehgelenke und/oder Verbindungsglieder aufweisen, welche beispielsweise wenigstens paarweise miteinander über die jeweiligen Drehgelenke verbunden sind. Insbesondere kann das Getriebe hierfür als Koppelgetriebe ausgebildet sein. Das Koppelgetriebe kann beispielsweise als viergliedrige Doppelschwinge ausgebildet sein. Dabei kann das Stützgestell als Gestell des Koppelgetriebes ausgebildet sein. Das Anbindungselement kann die Schwinge des Koppelgetriebes bereitstellen. Das Anbindungselement und das Stützgestell können beispielsweise über zwei Verbindungsglieder verbunden sein, wobei jedes der Verbindungsglieder jeweils an einem Ende über ein Drehgelenk mit dem Anbindungselement drehbar verbunden sein kann und/oder an einem anderen Ende über ein weiteres Drehgelenk mit dem Stützgestell verbunden sein kann.

Insbesondere dann, wenn das ungleichmäßig übersetzende Getriebe derart ausgebildet ist, dass der relativ zu dem Anbindungselement in einer festen Position gehaltene Punkt einem Schwerpunkt eines an dem Anbindungselement montierten Monitors entspricht bzw. näherungsweise mit diesem übereinstimmt, kann ein Schwenken des Monitors zumindest innerhalb des vorgegebenen Schwenkwinkels erfolgen, ohne dass eine bzw. wobei nur eine geringe Änderung des Höhenniveaus des Monitors - bezogen auf seinen Schwerpunkt - erfolgt. Dadurch müssen beim Schwenken des Monitors keine oder nur marginale vertikale Hebekräfte zum Anheben des Monitors aufgebracht werden, sondern im Wesentlichen lediglich Kräfte zum Überwinden von Reibung oder Kippen des Monitors.

Unter "Schwenkwinkel" wird vorliegend ein Winkel zwischen zwei unterschiedlichen Orientierungen des Monitors relativ zur Erdbeschleunigung verstanden. Dabei ist der Winkel jener, welcher sich ergibt, indem man eine imaginäre Ebene bildet, in welcher sich der Bildschirm des Monitors im Wesentlichen erstreckt, und die Ebene für die erste Orientierung des Monitors mit der Ebene für die zweite Orientierung schneidet. Der durch diese beiden Ebenen eingeschlossene Winkel wird als "Schwenkwinkel" verstanden.

Der Begriff "Bereich" wird in diesem Sinne so verstanden, dass der Punkt nicht auf einem exakt gleichen Höhenniveau bleiben muss, sondern dass der Punkt bezogen auf sein Höhenniveau auch in geringem Maße wandern kann. Mit anderen Worten kann sich die Lage des Punktes innerhalb einer gewissen Toleranz nach oben oder unten bewegen, bevorzugt um kleiner oder gleich ± 10 cm, besonders bevorzugt ± 5 cm, ganz besonders bevorzugt ± 2,5 cm und höchst bevorzugt ± 1 cm, ± 0,5 cm, ± 0,3 cm, ± 0,2 cm, ± 0,1 cm oder ± 0,05 cm.

Der in seiner Position festgehaltene Punkt ist bevorzugt von dem Anbindungselement beabstandet.

Gemäß einer alternativen bevorzugten Ausführungsform ist das ungleichmäßig übersetzende Getriebe derart ausgebildet, dass ein vorgegebener, relativ zu dem Anbindungselement in einer festen Position gehaltener Punkt bei einem Schwenken des Anbindungselements über das Koppelgetriebe relativ zum Stützgestell innerhalb eines vorgegebenen Schwenkwinkels im Bereich eines festen Raumpunktes gehalten ist. Mit anderen Worten ändert sich die Position des Punktes im Raum nicht oder nur geringfügig. Dadurch müssen beim Schwenken des Monitors keine oder nur marginale Hebekräfte zum Anheben des Monitors sowie zum Vorziehen oder Zurückziehen aufgebracht werden.

Zu diesem Zweck kann das Getriebe beispielsweise eine oder mehrere Drehgelenke und/oder Verbindungsglieder bzw. Glieder aufweisen, welche beispielsweise wenigstens paarweise miteinander über die jeweiligen Drehgelenke verbunden sind. Insbesondere kann das Getriebe hierfür als Koppelgetriebe ausgebildet sein. Das Koppelgetriebe kann beispielsweise ein achtgliedriges Koppelgetriebe aufweisen. An dem Stützgestell können zwei L-förmige Glieder beabstandet voneinander drehbar befestigt, welche weitere Verbindungsglieder darstellen können. Die Drehgelenke zur Anbindung an das Stützgestell können in einem mittleren Bereich der Glieder vorgesehen sein. Dadurch kann in Hinblick auf die Gliederzahl des Koppelgetriebes jedes der Glieder als zwei einzelne Glieder angesehen werden, welche drehfest miteinander verbunden sind. Ferner können die L-förmigen Glieder jeweils an einem Ende mit einem oberen Verbindungsglied drehgelenkig verbunden sein und/oder an einem anderen Ende mit einem unteren Verbindungsglied drehgelenkig verbunden sein. Die Drehgelenke zum Verbinden der Glieder mit dem oberen und dem unteren Verbindungsglied können dabei an jedem Verbindungsglied in einem Abstand voneinander angeordnet sein, wobei der Abstand am oberen und am unteren Verbindungsglied bevorzugt gleich groß ist. Die Verbindungsglieder können an einem gegenüberliegenden Ende jeweils mit dem Anbindungselement drehgelenkig verbunden sein. Die acht Glieder des Koppelgetriebes können mithin durch die vier einzelnen Glieder, die zwei Verbindungsglieder, das Stützgestell und das Anbindungselement ausgebildet sein.

"Bereich" in diesem Sinne wird so verstanden, dass der Punkt nicht auf den exakt gleichen Koordinaten im Raum bleiben muss, sondern dass der Punkt im Raum in geringem Maße wandern kann. Mit anderen Worten kann sich die Lage des Punktes innerhalb einer gewissen Toleranz bewegen, bevorzugt um kleiner oder gleich ± 10 cm in alle Raumrichtungen, besonders bevorzugt ± 5 cm, ganz besonders bevorzugt ± 2,5 cm_in alle Raumrichtungen. Bevorzugt kann die Toleranz in und entgegen der Erdbeschleunigungsrichtung kleiner sein, bevorzugt kleiner oder gleich ± 5 cm, besonders bevorzugt ± 2,5 cm, ganz besonders bevorzugt ± 1 cm_und höchst bevorzugt ± 0,5 cm, ± 0,3 cm, ± 0,2 cm, ± 0,1 cm oder ± 0,05 cm.

Wenn gemäß einer weiter bevorzugten Ausführungsform das Anbindungselement und/oder das ungleichmäßig übersetzende Getriebe derart ausgebildet sind, dass der Punkt einem Schwerpunkt eines an dem Anbindungselement angebundenen Monitors entspricht, kann der an dem Anbindungselement montierte Monitor geschwenkt werden, ohne dass bzw. wobei nur geringe Hebekräfte beim Schwenken des Monitors erforderlich werden.

Gemäß einer weiter bevorzugten Ausführungsform ist das ungleichmäßig übersetzende Getriebe ein Koppelgetriebe. Dadurch kann in besonderen Maße ein einfaches Schwenken eines an dem Anbindungselement befestigten Monitors ermöglicht werden. Zudem ist es dadurch möglich, den als Koppelgetriebe realisierten Kippmechanismus für den Monitor in einfacher Weise hinter dem Monitor zu platzieren, wodurch ein einfacher und kostengünstiger Aufbau erzielt werden kann, da keine auskragenden Ausleger vorgesehen werden müssen. Vielmehr kann das Koppelgetriebe nahe am Schwerpunkt des Monitors hinter diesem positioniert werden. Insbesondere im Vergleich zu herkömmlichen Vorrichtungen mit seitlich angeordnetem Drehgelenk können die Herstellkosten und die Komplexität des Aufbaus gering gehalten werden.

Zudem ist es dadurch möglich, dass bei einem Schwenken des an dem Anbindungselement montierten Monitors im Wesentlichen keine oder nur in geringerem Ausmaß Höhenenergie in das System aus Monitor und Vorrichtung eingebracht werden muss. Mit anderen Worten kann der Monitor bezüglich seines Schwerpunkts im Wesentlichen auf einem in etwa gleichen Höhenniveau gehalten werden. Dadurch ergeben sich nur geringe Bedienkräfte beim Schwenken. Dies ist insbesondere vorteilhaft gegenüber herkömmlichen Vorrichtungen mit hinter dem Monitor angeordneten Drehgelenken.

Gemäß einer weiter bevorzugten Ausführungsform ist das Koppelgetriebe als dreigliedriges, viergliedriges, fünfgliedriges, sechsgliedriges, siebengliedriges oder achtgliedriges Koppelgetriebe ausgebildet. Dadurch lässt sich ein einfacher Aufbau erreichen, so dass die Fertigungskosten gering gehalten werden können.

Ein besonders robuster und einfacher Aufbau der Vorrichtung kann erzielt werden, wenn das Koppelgetriebe gemäß einer weiter bevorzugten Ausführungsform in Form einer Doppelschwinge ausgebildet ist. Durch die kinematischen Rahmenbedingungen der Doppelschwinge kann verhindert werden, dass das Anbindungselement um das Stützgestell komplett umlaufen. Vielmehr kann erzielt werden, dass das Anbindungselement lediglich in einem vorbestimmten Bereich schwingen kann. Hierdurch kann vermieden werden, dass das Anbindungselement und/oder ein daran montierter Monitor mit anderen Bereichen der Vorrichtung, insbesondere dem Stützgestell, kollidiert.

Wenn das Koppelgetriebe in Form einer Schubkurbel, bevorzugt mit Geradführung, ausgebildet ist, kann der Aufbau des Koppelgetriebes besonders einfach ausgeführt werden. Die Geradführung ist dabei bevorzugt derart eingerichtet, dass eine im Wesentlichen horizontale Führung eines Schwerpunkt eines an der Vorrichtung montierten Monitors bereitgestellt ist.

Wenn gemäß einer weiter bevorzugten Ausführungsform das Stützgestell einem Gestell des Koppelgetriebes entspricht, kann ein besonders einfacher Aufbau der Vorrichtung erzielt werden, da keine zusätzlichen oder nur wenige Teile zum Ausbilden eines Gestells des_Koppelgetriebes notwendig sind.

Unter "Gestell des Koppelgetriebes" wird vorliegend der Teil des Koppelgetriebes verstanden, welcher ortsfest gegenüber einer externen Abstützung der Vorrichtung im Raum angeordnet ist, mithin keine Bewegung im Raum während des Schwenkens des Monitors erfährt. Über das Gestell werden die im Koppelgetriebe auftretenden Kräfte aufgenommen und an die Umgebung übertragen. Die externe Abstützung kann beispielsweise in Form einer direkten Anbindung an eine Decke oder Wand eines Raumes oder in Form eines flexiblen Tragarmsystems, welches flexibel im Raum positioniert werden kann, oder als verschiebbares Trägergestell ausgebildet sein.

Um den Aufbau der Vorrichtung besonders einfach und robust bereitzustellen, kann das Anbindungselement gemäß einer weiter bevorzugten Ausführungsform einer Schwinge des Koppelgetriebes entsprechen. Dadurch kann auf zusätzliche Teile zum Realisieren der Schwinge verzichtet werden.

Gemäß einer weiteren bevorzugten Ausführungsform weist das Koppelgetriebe Verbindungsglieder zwischen dem Stützgestell und dem Anbindungselement auf, wobei die Verbindungsglieder bevorzugt zumindest doppelt vorgesehen sind, wobei die Verbindungsglieder insbesondere bevorzugt in Bezug auf eine Symmetrieebene spiegelsymmetrisch angeordnet sind. Dadurch kann das Koppelgetriebe besonders robust aufgebaut sein und zudem auf einfache Weise eine besonders steife Struktur der Vorrichtung dargestellt werden.

In einer weiter bevorzugten Ausführungsform sind die einzelnen Glieder des Koppelgetriebes, bevorzugt umfassend Verbindungsglieder, Gestell und/oder Schwinge, mit jeweils angrenzenden Gliedern drehgelenkig verbunden, bevorzugt ist zum Verbinden zwischen einzelnen Gliedern jeweils ein Drehgelenk angeordnet.

Gemäß einer bevorzugten Weiterbildung kann ein Drehgelenk ein Gleitlager, bevorzugt ein Gleitlager mit Bund aufweisen.

Ferner kann gemäß einer bevorzugten Weiterbildung ein Drehgelenk mindestens eine Schraube aufweisen, bevorzugt zum Bereitstellen einer erforderlichen Anpresskraft und/oder Reibkraft am Drehgelenk. Durch die Reibkraft kann bevorzugt gewährleistet werden, dass das Koppelgetriebe sich nicht eigenständig verschwenkt, falls sich der Schwerpunkt des Monitors nicht exakt im angenommenen Schwerpunkt befinden sollte.

Gemäß einer bevorzugten Weiterbildung ist ein Drehgelenk derart ausgebildet, dass eine Schraube als Rotationslager dient, bevorzugt indem die Schraube in einem Gleitlager gelagert und/oder geführt ist.

Gemäß einer weiter bevorzugten Ausführungsform kann mindestens eine Mutter zum Verspannen von sich gegenüberliegenden Schrauben vorgesehen sein.

Weiterhin kann gemäß einer weiter bevorzugten Ausführungsform eine Kabelbefestigung zum Halten und/oder Führen von Anschlusskabeln für den Monitor vorgesehen sein.

Um die erforderlichen Bedienkräfte weiter zu reduzieren, kann das Koppelgetriebe gemäß einer bevorzugten Weiterbildung ein Federelement zum Unterstützen der Schwenkbewegung aufweisen, bevorzugt eine Druckfeder, eine Zugfeder und/oder eine Gasdruckfeder.

Wenn mindestens ein Drehgelenk des ungleichmäßig übersetzenden Getriebes, bevorzugt des Koppelgetriebes, zumindest bei einem Schwenken entgegen einer Richtung eines aus der Masse des montierten Monitors schwerkraftbedingt auf das des ungleichmäßig übersetzende Getriebe, bevorzugt das Koppelgetriebe, wirkenden Moments reibungsentkoppelt ausgebildet ist, wobei an dem Drehgelenk bevorzugt eine Freilaufkupplung vorgesehen ist, können die erforderlichen Bedienkräfte in die vorgenannte Richtung weiter reduziert werden. Insbesondere gilt dies, da die Reibkräfte in dem/den Drehgelenk/-en des Koppelgetriebes nur zum Halten des Monitors in Position notwendig sind, mithin um einem durch die Masse des Monitors in dessen Schwerpunkt erzeugten, auf das Koppelgetriebe wirkenden Moment entgegenzuwirken. Bevorzugt ist daher an dem mindestens einen Drehgelenk eine Freilaufkupplung vorgesehen.

Die Vorrichtung ist gemäß einer weiter bevorzugten Ausführungsform zum Anbinden an einen Monitor an dessen Rückseite, mithin hinter dem Monitor, ausgebildet. Dadurch kann die Vorrichtung beim Tragen des Monitors hinter diesem angeordnet sein.

Wenn die Vorrichtung gemäß einer weiter bevorzugten Ausführungsform ferner einen Motor zum Unterstützen der Schwenkbewegung des Anbindungselements relativ zum Stützgestell umfasst, können die durch einen Benutzer aufzubringenden, zum Schwenken erforderlichen Bedienkräfte und/oder Momente weiter reduziert werden.

Gemäß einer weiter bevorzugten Ausführungsform umfasst die Vorrichtung ferner ein Sensorelement zum Erfassen zumindest eines Messwertes, bevorzugt einen Kraftsensor und/oder einen Drehmomentsensor, wobei die Vorrichtung derart eingerichtet ist, dass, wenn der durch das Sensorelement erfasste Messwert größer oder gleich einem vorgegebenen Schwellenwert ist, der Motor zum Unterstützen der Schwenkbewegung aktiviert wird.

Eine solche Sensorsteuerung ist besonders vorteilhaft mit dem ungleichmäßig übersetzenden Getriebe und/oder wenn der festgehaltene Punkt dem Schwerpunkt des an dem Anbindungselements angebundenen Monitors entspricht. Dann ist es besonders einfach möglich, eine gleichmäßige Betätigungskraft bzw. Verstellkraft zum Verschwenken des Monitors durch einen Nutzer vorzugeben. Entsprechend kann der Schwellwert zur Unterstützung durch den Motor besonders gut vorgegeben werden. Es besteht beispielsweise nicht die Gefahr, dass der Schwellwert zu nah an einer Kraft zum Überwinden der Reibkraft und/oder Schwerkraft zum Verschwenken des Monitors ist, da diese unabhängig von der Stellung der Tragvorrichtung sein kann. So kann beispielsweise auf eine komplexe und teure Regelung verzichtet werden und das Verschwenken ist für den Bediener dennoch einfach und intuitiv.

Bevorzugt ist der Messwert eine durch das Sensorelement erfasste, durch eine Person aufgebrachte Kraft oder ein durch das Sensorelement erfasstes, durch eine Person aufgebrachtes Moment.

Der Motor kann bevorzugt als Servomotor ausgebildet sein, welcher entsprechend eines durch das Sensorelement erfassten Messwerts eine entsprechende Kraft oder ein entsprechendes Moment bereitstellt. Dadurch kann bevorzugt ferner eine Beschleunigung und/oder Geschwindigkeit der Schwenkbewegung des Monitors eingestellt und/oder angepasst werden.

Gemäß einer weiter bevorzugten Ausführungsform umfasst die Vorrichtung ferner einen Betätigungsschalter zum Betätigen des Motors, wobei der Betätigungsschalter eine erste Schaltstellung, welche einem ausgeschalteten Zustand des Motors entspricht, eine zweite Schaltstellung zum Betreiben des Motors in einem ersten Drehsinn und eine dritte Schaltstellung zum Betreiben des Motors in einem dem ersten Drehsinn entgegengesetzten Drehsinn aufweist. Dadurch ist es möglich, das Schwenken des Monitors über den Betätigungsschalter für sowohl ein nach oben als auch ein nach unten Schwenken zu steuern.

In einer bevorzugten Weiterbildung kann eine Fernsteuerung zum Steuern des Motors beanstandet von der Vorrichtung vorgesehen sein. Dadurch kann eine Person ein Schwenken des Monitors steuern, ohne sich an die Vorrichtung begeben zu müssen, mithin ohne seinen eigentlichen Arbeitsplatz, in welchem er den Monitor nutzt, verlassen zu müssen.

Bevorzugt weisen einige oder alle Gelenke der Vorrichtung zum Tragen des Monitors nur einen Freiheitsgrad auf, insbesondere jeweilige Gelenke des ungleichmäßig übersetzenden Getriebes. Beispielsweise können jeweilige Gelenke durch jeweilige Lager, insbesondere durch jeweilige Wälzlager und/oder Gleitlager, gebildet sein, welche einen einzigen rotatorischen Freiheitsgrad aufweisen. Bevorzugt sind jeweilige Drehachsen der Gelenke im Wesentlichen parallel zueinander angeordnet, insbesondere die Drehachsen jeweiliger Gelenke des ungleichmäßig übersetzenden Getriebes. Die Drehachsen dieser Gelenke kreuzen sich bevorzugt nicht. Das ungleichmäßig übersetzende Getriebe kann also kreuzungsfrei sein. Bevorzugt sind jeweilige Gelenke voneinander beabstandet angeordnet. Insbesondere kann das ungleichmäßig übersetzende Getriebe so ausgebildet sein, dass sich jeweilige Verbindungslinien zwischen dessen Drehachsen, welche mittels jeweiliger Glieder direkt miteinander verbunden sind, insbesondere in einer Ansicht entlang der jeweiligen Drehachsen, nicht schneiden und/oder überlappen. So kann eine besonders einfache und kompakte Konstruktion gebildet werden, insbesondere wenn das Getriebe als Koppelgetriebe ausgebildet ist.

In einer bevorzugten Weiterbildung sind das Stützgestell und das Anbindungselement über mindestens ein Drehgelenk zum Bereitstellen der Schwenkbarkeit des Anbindungselements relativ zum Stützgestell schwenkbar miteinander verbunden, wobei ein Motor, bevorzugt ein Elektromotor, zum Unterstützen der Schwenkbewegung des Anbindungselements relativ zum Stützgestell vorgesehen ist. Der Motor kann dem bereits zuvor beschriebenen Motor entsprechen und/oder auf das Drehgelenk wirken. Das Drehgelenk kann insbesondere ein Gelenk sein, mittels welchem das Stützgestell mit einer Wand, einem Boden, einem fahrbaren Gestell oder einem anderen Objekt in der Umgebung verbunden ist. Es kann sich aber beispielsweise auch um ein anderes Drehgelenk des ungleichmäßig übersetzenden Getriebes handeln oder ein zusätzliches Gelenk, welches nicht zum Getriebe selber gehört. Eine Unterstützung über ein Gelenk kann eine kompakte Bauweise, eine Kraftübertragung mit geringeren Verlusten und/oder ein hohes Moment ermöglichen, ohne dass die Vorrichtung verstärkt werden muss. Der Motor kann so auch leicht nachgerüstet werden.

Die Aufgabe wird ferner durch eine Vorrichtung zum Tragen eines Monitors, bevorzugt einen schwenkbaren Monitorträger, mit den Merkmalen des Anspruchs 16 gelöst. Vorteilhafte Weiterbildungen ergeben sich aus den Unteransprüchen, der Beschreibung und den Figuren.

Entsprechend wird eine Vorrichtung zum Tragen eines Monitors, umfassend ein Anbindungselement zum Verbinden mit einem Monitor und ein Stützgestell zum Abstützen der Vorrichtung gegen die Umgebung vorgeschlagen , wobei das Anbindungselement und das Stützgestell relativ zueinander schwenkbar angeordnet sind. Dabei sind das Stützgestell und das Anbindungselement über mindestens ein Drehgelenk zum Bereitstellen der Schwenkbarkeit des Anbindungselements relativ zum Stützgestell schwenkbar miteinander verbunden, wobei ein Motor, bevorzugt ein Elektromotor, zum Unterstützen der Schwenkbewegung des Anbindungselements relativ zum Stützgestell vorgesehen ist.

Durch das Vorsehen des Motors, bevorzugt des Elektromotors, zum Unterstützen der Schwenkbewegung des Anbindungselements relativ zum Stützgestell kann eine Bedienkraft, welche eine Person zum Schwenken des Monitors um das Drehgelenk aufzubringen hat, reduziert werden, da der Motor selbst eine Kraft bzw. ein Moment bereitstellt, mittels welchem der Motor in Richtung der Schwenkbewegung wirkt. Der Motor kann mithin das Schwenken des Monitors unterstützen oder gar gänzlich übernehmen. Mit anderen Worten kann der Motor im letzteren Falle eine Kraft bzw. ein Moment bereitstellen, welches ausreicht, den Monitor ohne zusätzliche externe Kräfte zu bewegen.

Gemäß einer weiter bevorzugten Ausführungsform umfasst die Vorrichtung ferner ein Sensorelement zum Erfassen zumindest eines Messwertes, bevorzugt einen Kraftsensor und/oder einen Drehmomentsensor, wobei die Vorrichtung derart eingerichtet ist, dass wenn der durch das Sensorelement erfasste Messwert größer oder gleich einem vorgegebenen Schwellenwert ist, der Motor zum Unterstützen der Schwenkbewegung aktiviert wird.

Bevorzugt ist der Messwert eine durch das Sensorelement erfasste, durch eine Person aufgebrachte Kraft oder ein durch das Sensorelement erfasstes, durch eine Person aufgebrachtes Moment.

Der Motor kann bevorzugt als Servomotor ausgebildet sein, welcher entsprechend eines durch das Sensorelement erfassten Messwerts eine entsprechende Kraft oder ein entsprechendes Moment bereitstellt. Dadurch kann bevorzugt ferner eine Beschleunigung und/oder Geschwindigkeit der Schwenkbewegung des Monitors eingestellt und/oder angepasst werden.

Gemäß einer weiter bevorzugten Ausführungsform umfasst die Vorrichtung ferner einen Betätigungsschalter zum Betätigen des Motors, wobei der Betätigungsschalter eine erste Schaltstellung, welche einem ausgeschalteten Zustand des Motors entspricht, eine zweite Schaltstellung zum Betreiben des Motors in einem ersten Drehsinn und eine dritte Schaltstellung zum Betreiben des Motors in einem dem ersten Drehsinn entgegengesetzten Drehsinn aufweist. Dadurch ist es möglich, das Schwenken des Monitors über den Betätigungsschalter zu steuern.

In einer bevorzugten Weiterbildung kann eine Fernsteuerung zum Steuern des Motors beanstandet von der Vorrichtung vorgesehen sein. Dadurch kann eine Person ein Schwenken des Monitors steuern, ohne sich an die Vorrichtung begeben zu müssen, mithin ohne seinen eigentlichen Arbeitsplatz, in welchem er den Monitor nutzt, verlassen zu müssen.

Die Vorrichtung kann synonym auch als "schwenkbarer Monitorträger" bezeichnet werden.

### Kurze Beschreibung der Figuren

Bevorzugte weitere Ausführungsformen der Erfindung werden durch die nachfolgende Beschreibung der Figuren näher erläutert. Dabei zeigen:
- Figur 1: schematisch eine Seitenansicht einer Vorrichtung zum Tragen eines Monitors gemäß einer ersten Ausführungsform;
- Figur 2: schematisch eine weitere Seitenansicht der Vorrichtung aus Figur 1;
- Figur 3: schematisch die Vorrichtung aus Figur 1 mit einem daran montierten Monitor;
- Figur 4: schematisch die Vorrichtung aus Figur 2 mit dem daran montierten Monitor;
- Figur 5: schematisch eine Seitenansicht einer Vorrichtung zum Tragen eines Monitors gemäß einer weiteren Ausführungsform;
- Figur 6: schematisch eine Seitenansicht einer Vorrichtung zum Tragen eines Monitors gemäß einer weiteren Ausführungsform;
- Figur 7: schematisch eine Seitenansicht einer Vorrichtung zum Tragen eines Monitors gemäß einer weiteren Ausführungsform;
- Figur 8: schematisch eine perspektivische Seitenansicht der Vorrichtung aus Figur 7;
- Figur 9: schematisch eine weitere perspektivische Seitenansicht der Vorrichtung aus Figur 7;
- Figur 10: schematisch eine Prinzipskizze einer Vorrichtung zum Tragen eines Monitors gemäß einer weiteren Ausführungsform;
- Figur 11: schematisch eine Seitenansicht einer Vorrichtung zum Tragen eines Monitors gemäß einer alternativen Ausführungsform; und
- Figur 12: schematisch eine weitere Seitenansicht der Vorrichtung aus Figur 11.

### Detaillierte Beschreibung bevorzugter Ausführungsbeispiele

Im Folgenden werden bevorzugte Ausführungsbeispiele anhand der Figuren beschrieben. Dabei werden gleiche, ähnliche oder gleichwirkende Elemente in den unterschiedlichen Figuren mit identischen Bezugszeichen versehen, und auf eine wiederholte Beschreibung dieser Elemente wird teilweise verzichtet, um Redundanzen zu vermeiden.

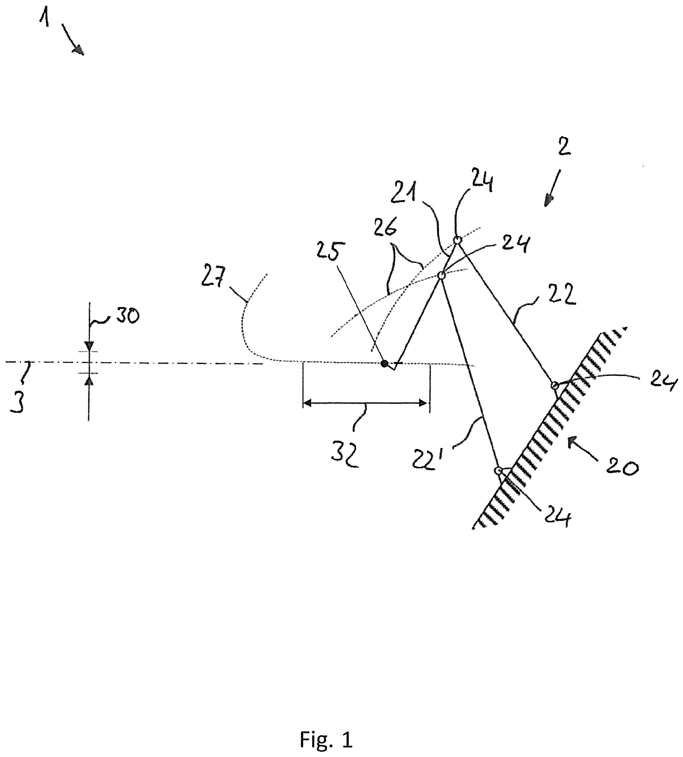

In Figur 1 ist schematisch eine Seitenansicht einer Vorrichtung 1 zum Tragen eines Monitors gemäß einer ersten Ausführungsform gezeigt. Die Vorrichtung 1 umfasst ein Anbindungselement 21 zum Verbinden mit dem Monitor und ein Stützgestell 20 zum Abstützen der Vorrichtung 1 gegen die Umgebung, wobei das Anbindungselement 21 und das Stützgestell 20 relativ zueinander schwenkbar angeordnet sind. Um die Schwenkbarkeit des Anbindungselements 21 relativ zum Stützgestell 20 bereitzustellen, sind diese über ein Koppelgetriebe 2 schwenkbar miteinander verbunden.

Das Koppelgetriebe ist vorliegend als viergliedrige Doppelschwinge ausgebildet. Dabei ist das Stützgestell 20 als Gestell des Koppelgetriebes ausgebildet. Das Anbindungselement 21 stellt die Schwinge des Koppelgetriebes bereit. Das Anbindungselement 21 und das Stützgestell 20 sind über zwei Verbindungsglieder 22, 22' verbunden, wobei jedes der Verbindungsglieder 22, 22' jeweils an einem Ende über ein Drehgelenk 24 mit dem Anbindungselement 21 drehbar verbunden ist und an einem anderen Ende über ein weiteres Drehgelenk 24 mit dem Stützgestell 20 verbunden ist.

Mittels des Bezugszeichens 26 sind die Bewegungsbahnen der Drehgelenke 24 des Anbindungselements 21 angedeutet. Ferner stellt die durch das Bezugszeichen 27 gekennzeichnete Kurve eine Schwingkurve eines vorgegebenen Punktes 25 dar, welcher sich relativ zu dem Anbindungselement 21 stets in einer festen Position befindet. Mit anderen Worten schwingt der Punkt 25 mit dem Anbindungselement 21 mit bzw. ist mit diesem zumindest imaginär verbunden.

Das Koppelgetriebe 2 ist vorliegend derart ausgebildet, dass der vorgegebene Punkt 25 bei einem Schwenken des Anbindungselements 21 über das Koppelgetriebe 2 relativ zum Stützgestell 20 entlang einer vorgegebenen Weglänge 32 der Schwingkurve 27 im Bereich 30 einer horizontalen Ebene 3 geführt wird. Mit anderen Worten ist das Koppelgetriebe 2 derart ausgebildet, dass entlang der vorgegebenen Weglänge 32 eine im Wesentlichen horizontale Geradführung des Punktes 25 bereitgestellt ist.

Der Bereich 30 ist so zu verstehen, dass der Punkt 25 nicht auf einem exakt gleichen Höhenniveau bleiben muss, sondern dass der Punkt bezogen auf sein Höhenniveau bzw. die horizontale Ebene 3 in geringem Maße wandern kann. Mit anderen Worten kann sich die Lage des Punktes 25 innerhalb einer gewissen Toleranz nach oben oder unten bewegen, vorliegend um ± 0,2 cm. Alternativ können auch andere Toleranzvorgaben vorgegeben sein.

Die Vorrichtung 1 ist zum Anbinden an einen Monitor an dessen Rückseite, mithin hinter dem Monitor, ausgebildet.

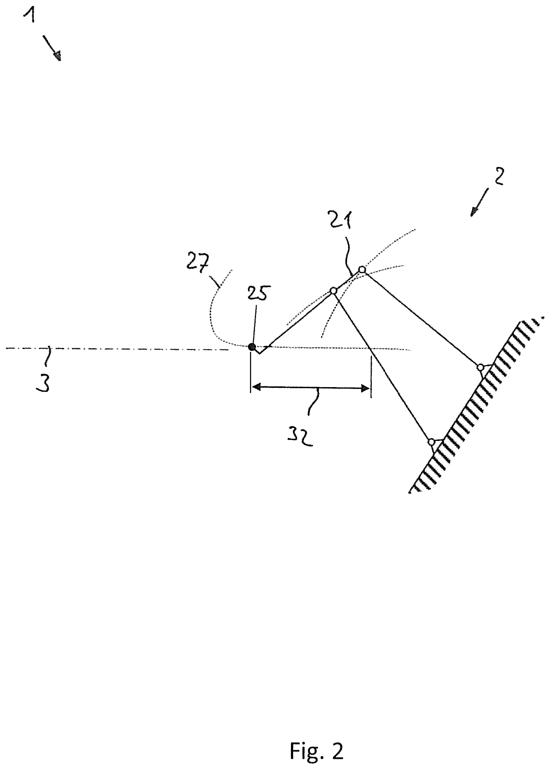

Figur 2 zeigt schematisch eine weitere Seitenansicht der Vorrichtung 1 aus Figur 1. Im Vergleich zu der Darstellung in Figur 1 ist das Anbindungselement 21 um einen gewissen Schwenkwinkel geschwenkt. Dadurch ist der Punkt 25 entlang seiner Schwingkurve 27 entsprechend bewegt worden, so dass er die in Figur 2 gezeigte Position aufweist. Da die Bewegung des Punktes 25 innerhalb der vorgegebenen Weglänge 32 erfolgte, ist der Punkt 25 im Wesentlichen auf dem gleichen Höhenniveau gehalten worden.

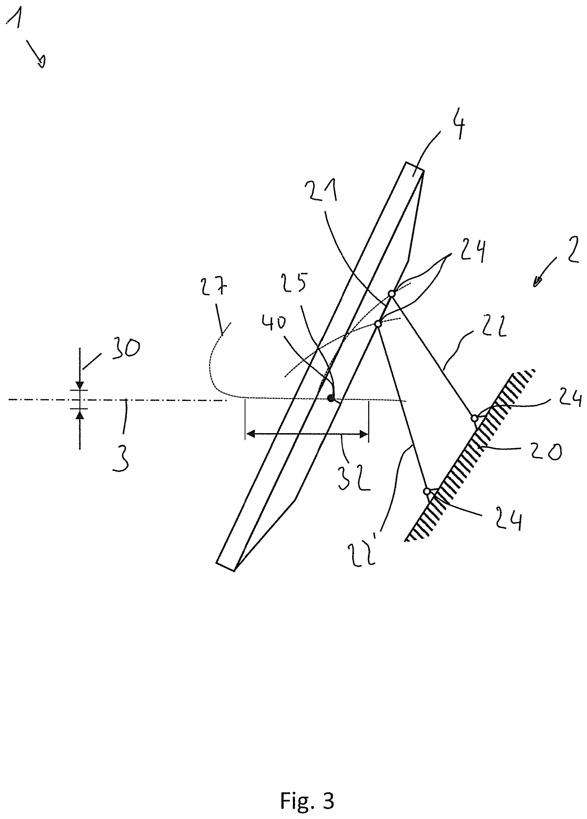

Aus Figur 3 ist schematisch die Vorrichtung 1 aus Figur 1 mit einem daran montierten Monitor 4 zu entnehmen. Das Anbindungselement 21 und das Koppelgetriebe 2 sind derart ausgelegt und ausgebildet, dass der Punkt 25 einem Schwerpunkt 40 des an dem Anbindungselement 21 montierten Monitors 4 entspricht.

Der Monitor 4 kann dadurch geschwenkt werden, dass er mitsamt dem daran befestigten Anbindungselement 21 (bzw. anders herum) über das Koppelgetriebe 2 durch eine Rotation der Glieder 20, 21, 22, 22' über die Drehgelenke 24 relativ zum Stützgestell 20 geschwenkt wird.

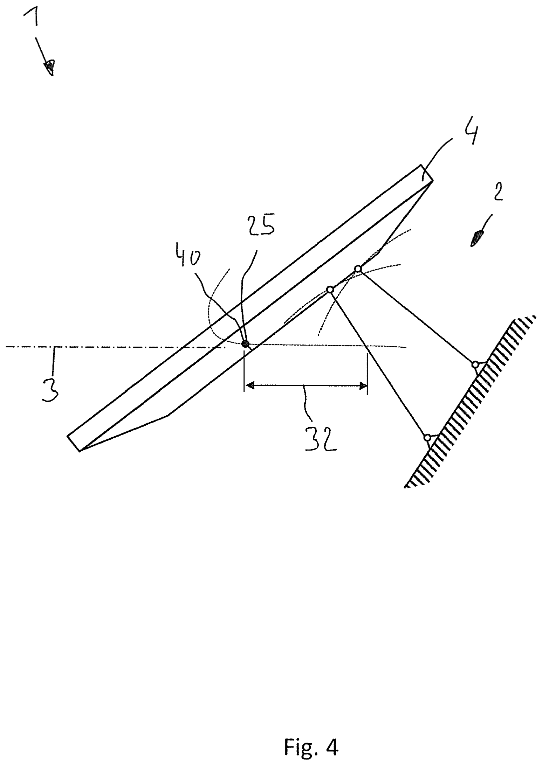

Ein entsprechend geschwenkter Monitor 4, welcher eine gemäß der der Schwenkbewegung im Vergleich zur Figur 3 geänderten Orientierung aufweist, ist Figur 4 zu entnehmen, welche schematisch die Vorrichtung 1 aus Figur 2 mit dem daran montierten Monitor 4 zeigt. Wie sofort ersichtlich, kann aufgrund des Koppelgetriebes 2 der Schwerpunkt 40 des Monitors 4 bei einem Schwenken des Monitors 4 aus einer ersten Orientierung des Monitors 4 im Raum (siehe Figur 3) in eine davon abweichende zweite Orientierung im Raum (siehe Figur 4) im Wesentlichen auf dem Niveau der horizontalen Ebene 3 gehalten werden.

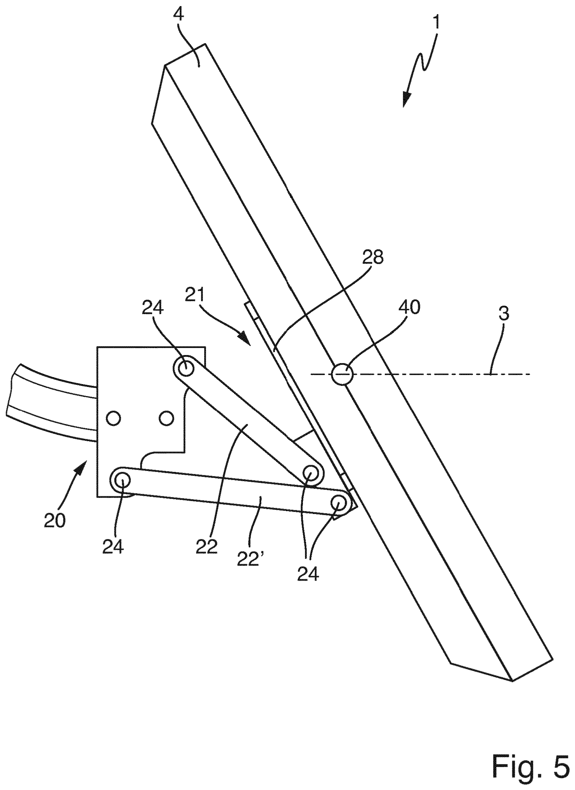

Figur 5 zeigt schematisch eine Seitenansicht einer Vorrichtung 1 zum Tragen eines Monitors 4 gemäß einer weiteren Ausführungsform. Die Vorrichtung 1 entspricht in ihrem Aufbau in Wesentlichen jener aus Figur 1. Zur Anbindung des Monitors 4 weist das Anbindungselement 4 eine Platte 28 auf, welche über Verbindungselemente, beispielsweise Schrauben, (nicht gezeigt) an eine Anbindung des Monitors 4 angebunden werden kann.

Die Vorrichtung 1 ist vorliegend ebenfalls derart ausgebildet, dass ein Schwenken des Monitors 4 bzw. des Anbindungselements 21 über die Verbindungsglieder 22, 22' relativ zum Stützgestell 20 keine Änderung des Höhenniveaus des Schwerpunkts 40 des Monitors 4 erzeugt. Der Schwerpunkt 40 kann mithin auf dem Niveau der horizontalen Ebene 3 gehalten werden.

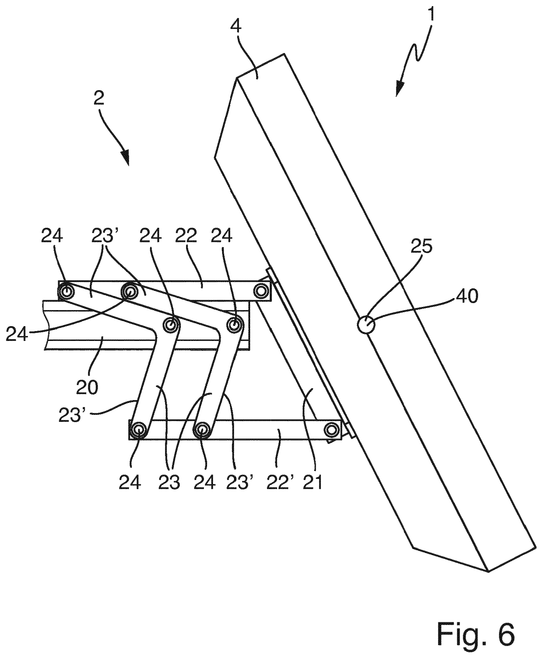

In Figur 6 ist schematisch eine Seitenansicht einer Vorrichtung 1 zum Tragen eines Monitors 4 gemäß einer weiteren Ausführungsform gezeigt, welche ein achtgliedriges Koppelgetriebe 2 aufweist. An dem Stützgestell 20 sind zwei L-förmige Glieder 23 beabstandet voneinander drehbar befestigt, welche weitere Verbindungsglieder darstellen. Da die Drehgelenke 24 zur Anbindung an das Stützgestell 20 in einem mittleren Bereich der Glieder 23 vorgesehen sind, kann in Hinblick auf die Gliederzahl des Koppelgetriebes 2 jedes der Glieder 23 als zwei einzelne Glieder 23' angesehen werden, welche drehfest miteinander verbunden sind. Ferner sind die L-förmigen Glieder 23 jeweils an einem Ende mit einem oberen Verbindungsglied 22 drehgelenkig verbunden und an einem anderen Ende einem unteren Verbindungsglied 22' drehgelenkig verbunden. Die Drehgelenke 24 zum Verbinden der Glieder mit dem oberen und dem unteren Verbindungsglied 22, 22' sind dabei an jedem Verbindungsglied 22, 22' in einem Abstand voneinander angeordnet, wobei der Abstand am oberen und am unteren Verbindungsglied 22, 22' bevorzugt gleich groß ist. Die Verbindungsglieder 22, 22' sind an einem gegenüberliegenden Ende jeweils mit dem Anbindungselement 21 drehgelenkig verbunden. Die acht Glieder des Koppelgetriebes 2 sind mithin durch die vier einzelnen Glieder 23', die zwei Verbindungsglieder 22, 22', das Stützgestell 20 und das Anbindungselement 20 ausgebildet.

Durch die in Figur 6 gezeigte Ausbildung des Koppelgetriebes 2 kann ein vorgegebener, relativ zu dem Anbindungselement 21 in einer festen Position gehaltener Punkt 25, welcher dem Schwerpunkt 40 des Monitors 4 im montierten Zustand entspricht, bei einem Schwenken des Anbindungselements 21 bzw. des Monitors 4 über das Koppelgetriebe 2 relativ zum Stützgestell 20 innerhalb eines vorgegebenen Schwenkwinkels im Bereich eines festen Raumpunktes gehalten werden. Mit anderen Worten behält der Schwerpunkt 40 bei einem Schwenken des Monitors 4 über das Koppelgetriebe 2 im Wesentlichen dieselben Raumkoordinaten bei.

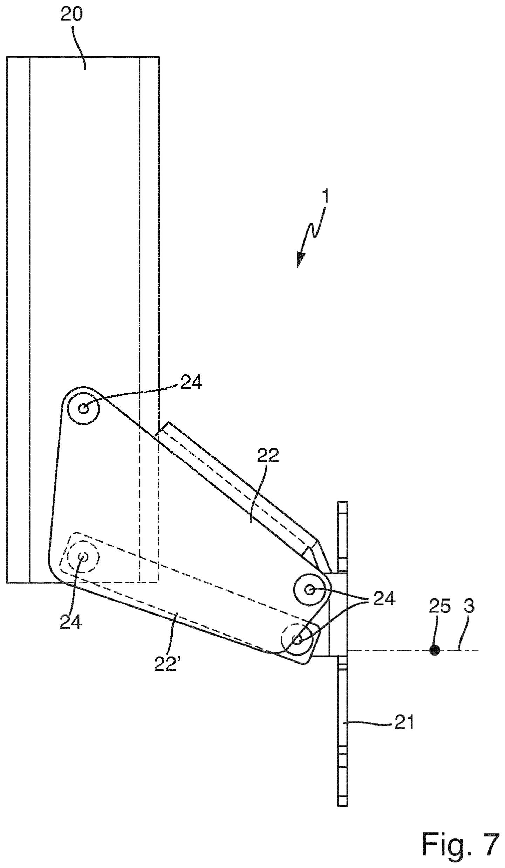

Figur 7 zeigt schematisch eine Seitenansicht einer Vorrichtung 1 zum Tragen eines Monitors (nicht gezeigt) gemäß einer weiteren Ausführungsform. Die Vorrichtung entspricht im Wesentlichen jenen der Figuren 1 bis 5. Das Stützgestell 20 ist in Form eines Extrusionsprofils bereitgestellt. An dem Stützgestell 20 sind ein oberes Verbindungsglied 22 und ein unteres Verbindungsglied 22' über Drehgelenke 24 drehbar montiert. Die Verbindungsglieder 22, 22' sind an deren anderen Enden mit dem Anbindungselement 21 über weitere Drehgelenke 24 drehbar verbunden. Vorliegend ist das obere Verbindungsglied 22 derart ausgebildet, dass es das untere Verbindungsglied 22' außen überlappt, um einen Schutz gegen Verletzungen der Finger eines Bedieners durch Scheren bereitstellen zu können. Um den Aufbau des Koppelgetriebes 2 graphisch zu verdeutlichen, ist das Verbindungsglied 22' durch das Verbindungsglied 22 in Figur 7 durchscheinend dargestellt.

Aufgrund des Koppelgetriebes 2 ist es möglich, einen zu haltenden Monitor von hinten durch die Vorrichtung 1 zu halten. Mit anderen Worten ist die Vorrichtung 1 - bei einem System aus Vorrichtung 1 und daran montiertem Monitor - hinter dem Monitor, mithin auf dessen Rückseite angeordnet. Dabei kann aufgrund der Länge der einzelnen Glieder 20, 21, 22, 22' des Koppelgetriebes 2 bzw. der Position der einzelnen Drehgelenke 24 des Koppelgetriebes 2 zueinander bei einem Schwenken des Anbindungselements 21 relativ zum Stützgestell 20 der Punkt 25, welcher aufgrund der Auslegung des Koppelgetriebes 2 einem Schwerpunkt 40 eines montierten Monitors 4 entspricht, im Wesentlichen auf Höhe der bzw. im Bereich des Höhenniveaus der horizontalen Ebene 3 gehalten werden.

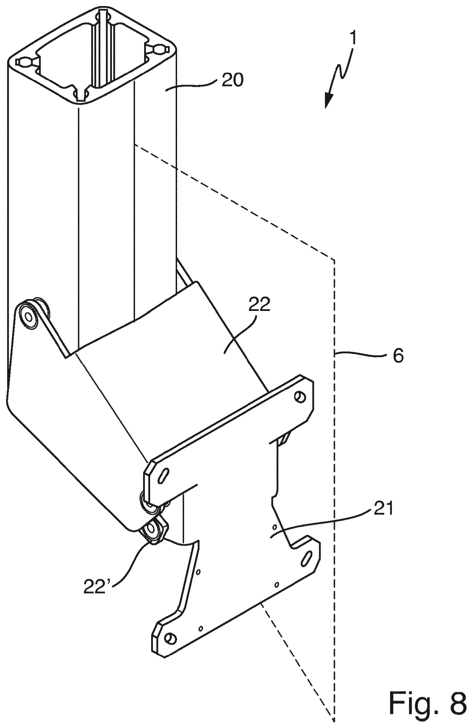

Figur 8 zeigt schematisch eine perspektivische Seitenansicht der Vorrichtung 1 aus Figur 7. Gut zu erkennen ist hier, dass die Verbindungsglieder 22, 22' doppelt vorgesehen sind, wobei die Verbindungsglieder 22, 22' in Bezug auf eine Symmetrieebene 6 beidseits des Stützgestells 20 spiegelsymmetrisch angeordnet sind. Die beiden oberen Verbindungsglieder 22 sind vorliegend aus einem zweifach gebogenen Biegeblech einstückig bereitgestellt. Die beiden unteren Verbindungsglieder 22' sind als separate Stabelemente, vorzugsweise aus einem plattenförmigen Material ausgebildet.

Das Anbindungselement 21 ist in Form einer etwa X-förmigen Platte mit abgebogenen Laschen bereitgestellt, welche zur gelenkigen Verbindung mit den Verbindungsgliedern 22, 22' dienen.

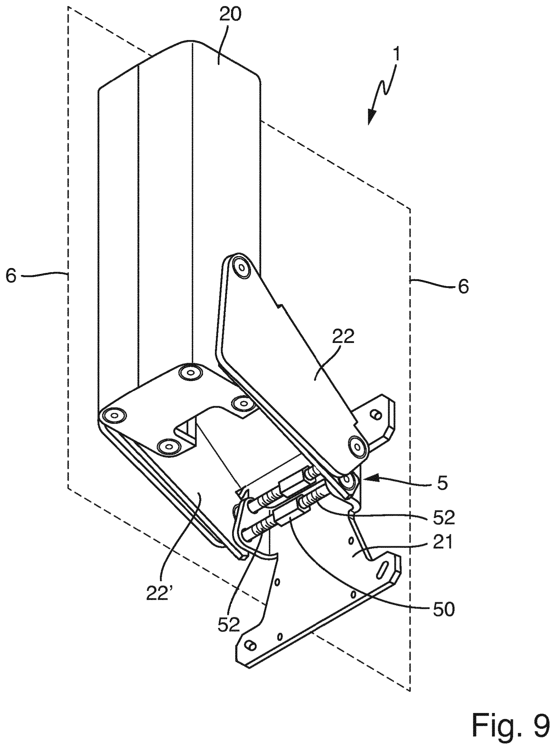

In Figur 9 ist schematisch eine weitere perspektivische Seitenansicht der Vorrichtung 1 aus Figur 7 gezeigt. Die Drehgelenke 24 weisen jeweils ein in den Laschen positioniertes Gleitlager 5 mit Bund auf, in welchem jeweils eine Schraube 52 aufgenommen ist. Die Schrauben 52 in den Gleitlagern 5 des Anbindungselements 21 sind mittels langen Muttern 50 verspannt, wobei jeweils eine Schraube 52 mit der ihr - bezogen auf die Symmetrieebene 6 - gegenübergelegenen Schraube 52 durch eine Mutter 50 verspannt ist. Durch dieses Verspannen ist eine Anpresskraft zum Bereitstellen der Reibkraft am Drehgelenk bereitgestellt, welche verhindert, dass das Koppelgetriebe 2 aufgrund der Masse des Monitors aus der eingestellten Position schwenkt. Zudem kann durch die Reibkraft gewährleistet werden, dass das Koppelgetriebe 2 sich nicht eigenständig verschwenkt, falls sich der Schwerpunkt 40 des Monitors 4 nicht exakt im angenommenen Punkt 25 (siehe Figur 7) befindet.

Alternativ oder zusätzlich können auch die Drehgelenke 24 am Stützgestell 20 mit Gleitlagern ausgebildet sein.

Die Vorrichtung weist ferner eine hier nicht gezeigte Kabelbefestigung zum Halten und/oder Führen von Anschlusskabeln für den Monitor auf.

Zusätzlich können zumindest die Drehgelenke 24 des Anbindungselements 21 optional zumindest bei einem Schwenken entgegen einer Richtung eines aus der Masse des montierten Monitors 4 über den Abstand zum Schwerpunkt 40 schwerkraftbedingt auf das Koppelgetriebe 2 wirkenden Moments reibungsentkoppelt ausgebildet sein. Hierzu kann an den Drehgelenken 24 bevorzugt eine optionale Freilaufkupplung vorgesehen sein.

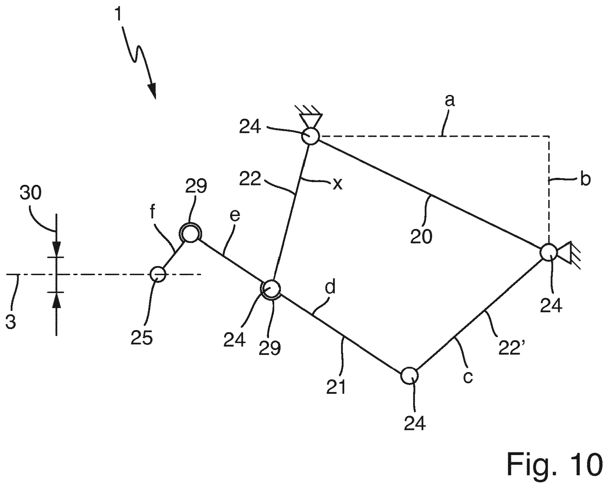

Aus Figur 10 ist schematisch eine Prinzipskizze einer Vorrichtung 1 zum Tragen eines Monitors gemäß einer weiteren Ausführungsform zu entnehmen. Sie entspricht im Wesentlichen der Vorrichtung aus den Figuren 1 bzw. 7, wobei in der untenstehenden Tabelle 1 verschiedene Konfigurationen der Längen der einzelnen Glieder 20, 21, 22, 22' des Koppelgetriebes 2, bezeichnet als "Konf." aufgelistet sind, mit welchen bei dem in Figur 10 dargestellten viergliedrigen Koppelgetriebe 2 die Vorrichtung 1 über eine gewisse Weglänge eine im Wesentlichen horizontale Geradführung des Punktes 25 ermöglicht. Mit anderen Worten stellen die in Tabelle 1 genannten Konfigurationen konkrete Ausgestaltungen bereit, bei welchen der Punkt 25 innerhalb des Bereichs 30 in Bezug auf die horizontale Ebene 3 gehalten werden kann. Mit den Bezugszeichen a bis f sowie x sind dabei die jeweiligen Längen der Glieder 20, 21, 22, 22' wiedergegeben.

Das Anbindungselement 21 weist eine Unterteilung in einen Bereich zwischen den Drehlagern 24, angedeutet mit dem Bezugszeichen d, und einen Bereich jenseits des Drehlagers 24, welches das Anbindungselement 21 mit dem Verbindungsglied 22 verbindet, angedeutet mit dem Bezugszeichen e, auf. Ferner ist ein Abstand des Punktes 25 orthogonal zur Längserstreckung des Anbindungselements 21 mittels des Bezugszeichens f angedeutet. Die Bereiche e und d des Anbindungselements 21 sind über eine drehfeste Verbindung 29 verbunden. Ebenso sind die Bereiche e und f über eine Drehfeste Verbindung 29 miteinander verbunden.

Die Position der beiden Drehgelenke 24 des Stützgestells 20 relativ zueinander ist in eine horizontale Komponente, angedeutet mit dem Bezugszeichen a, und eine vertikale Komponente,_angedeutet mit dem Bezugszeichen b, unterteilt.

Die Länge des Gliedes 20 ergibt sich mithin aus der Summe der Bereiche a und b. Die Länge des Gliedes 22 ergibt sich entsprechend der Länge des Bereichs x.

**Tab. 1: Bevorzugte Ausführungen:**

| **Glied** | **Kont. 1** | **Konf. 2** | **Konf. 3** | **Konf. 4** | **Konf. 5** | **Konf. 6** | **Konf. 7** | **Konf. 8** | **Konf. 9** |
|---|---|---|---|---|---|---|---|---|---|
| a | 30 mm | 0 mm | 30 mm | 32 mm | 85 mm | 0 mm | 0 mm | 0 mm | 0 mm |
| b | 37 mm | 136 mm | 48 mm | 55 mm | 90 mm | 55 mm | 64 mm | 59 mm | 59 mm |
| c | 129 mm | 105 mm | 110 mm | 116 mm | 184 mm | 105 mm | 90 mm | 118 mm | 115 mm |
| d | 18 mm | 52 mm | 23 mm | 23 mm | 34 mm | 21 mm | 24 mm | 21 mm | 21 mm |
| e | 56 mm | 0 mm | 55 mm | 55 mm | 38 mm | -11 mm | 28 mm | -11mm | -10 mm |
| f | 55 mm | 60 mm | 20 mm | 30 mm | 70 mm | 60 mm | 53 mm | 60 mm | 60 mm |
| x | 111 mm | 46 mm | 116 mm | 115 mm | 104 mm | 80 mm | 96 mm | 91 mm | 91 mm |

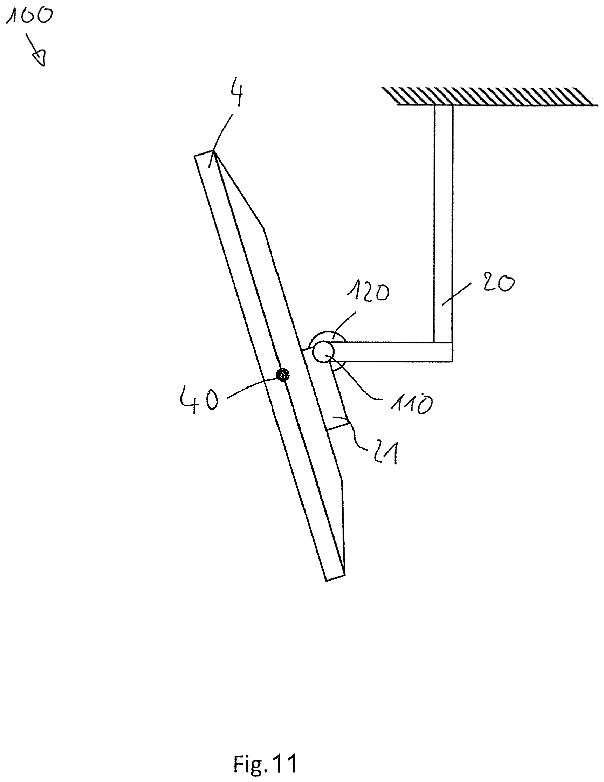

Figur 11 zeigt schematisch eine Seitenansicht einer Vorrichtung 100 zum Tragen eines Monitors 4 gemäß einer alternativen Ausführungsform. Die Vorrichtung 100 umfasst ein Anbindungselement 21 zum Verbinden mit einem Monitor 4 und ein Stützgestell 20 zum Abstützen der Vorrichtung 100 gegen die Umgebung, wobei das Anbindungselement 21 und das Stützgestell 20 relativ zueinander schwenkbar angeordnet sind. Die Schwenkbarkeit des Anbindungselements 21 relativ zum Stützgestellt 20 wird über ein als Drehlager mit einer festen Drehachse (nicht gezeigt) ausgebildetes Drehgelenk 110 bereitgestellt. Ferner umfasst die Vorrichtung 100 einen als Elektromotor ausgebildeten Motor 100, welcher im Bereich des Drehgelenks 110 angeordnet ist und derart ausgebildet ist, dass er ein Drehmoment bereitstellt, mittels welchem das Anbindungselement 21 samt Monitor 4 relativ zum Stützgestell 20 geschwenkt werden kann.

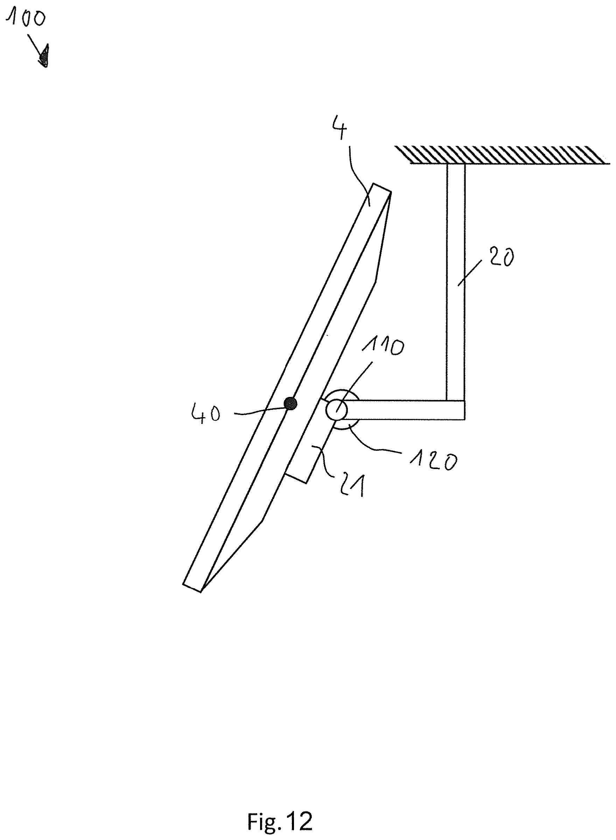

Figur 12 zeigt schematisch eine weitere Seitenansicht der Vorrichtung 100 aus Figur 11. Im Vergleich zu der Darstellung in Figur 11 ist das Anbindungselement 21 um einen gewissen Schwenkwinkel nach oben geschwenkt. Dadurch ist entsprechend der Schwerpunkt 40 des Monitors 4 in Gravitationsrichtung gesehen nach oben bewegt worden. Mithin weist der Monitor 4 in Vergleich zu seiner Stellung in Figur 11 eine erhöhtes Energiepotential auf. Mit anderen Worten ist, um den Monitor 4 von der in Figur 11 gezeigten Position in die in Figur 12 gezeigte Stellung zu bewegen, dem Monitor Höhenenergie zuzuführen. Diese ist bei einem Schwenken um das Drehgelenk 110 entsprechend durch eine externe Kraft einzubringen. Dies übernimmt vorliegend der Motor 120.

Die Vorrichtung 100 umfasst ferner ein nicht gezeigtes, optionales Sensorelement in Form eines Drehmomentsensors. Die Vorrichtung 100 ist dabei derart eingerichtet, dass wenn der durch das Sensorelement erfasste Messwert größer oder gleich einem vorgegebenen Schwellenwert ist, der Motor zum Unterstützen der Schwenkbewegung aktiviert wird. Übt eine Person auf den Monitor 4 und mithin auf das Anbindungselement 21 ein Moment aus, so erfasst dies das Sensorelement. Der Motor 120 übt entsprechend der Größe des erfassten Moments ein Drehmoment auf das Anbindungselement 21 aus, um das durch die Person induzierte Schwenken des Monitors 4 zu unterstützen. Fällt das durch die Person aufgebrachte Moment wieder unterhalb des Schwellenwerts, so wird der Motor 140 deaktiviert.

Ferner kann die Vorrichtung 100 optional einen Betätigungsschalter (nicht gezeigt) zum Betätigen des Motors aufweisen, wobei der Betätigungsschalter eine erste Schaltstellung, welche einem ausgeschalteten Zustand des Motors entspricht, eine zweite Schaltstellung zum Betreiben des Motors in einem ersten Drehsinn und eine dritte Schaltstellung zum Betreiben des Motors in einem dem ersten Drehsinn entgegengesetzten Drehsinn aufweist.

Der Motor 120 der Ausführungsform nach Fig. 10 bzw. 11 kann auch so, inklusive weiterer Teile und Steuerungen, mit den anderen geschilderten Ausführungsformen kombiniert werden. Insbesondere kann dieser dabei mit einem entsprechenden der Drehgelenke der anderen Ausführungsformen verbunden sein.

Soweit anwendbar, können alle einzelnen Merkmale, die in den Ausführungsbeispielen dargestellt sind, miteinander kombiniert und/oder ausgetauscht werden, ohne den Bereich der Erfindung zu verlassen.

### Bezugszeichenliste

- 1: Vorrichtung
- 2: Koppelgetriebe
- 20: Stützgestell
- 21: Anbindungselement
- 22, 22': Verbindungsglied
- 23, 23': Weiteres Glied
- 24: Drehgelenk
- 25: Punkt
- 26: Bewegungsbahn
- 27: Schwingkurve
- 28: Platte
- 29: Drehfeste Verbindung
- 3: Horizontale Ebene
- 30: Bereich
- 32: Weglänge
- 4: Monitor
- 40: Schwerpunkt
- 5: Gleitlager
- 50: Mutter
- 52: Schraube
- 6: Symmetrieebene
- 100: Vorrichtung
- 110: Drehgelenk
- 120: Motor
- a-f, x: Gliederlänge

## Patentansprüche

1. Vorrichtung (1) zum Tragen eines Monitors (4), umfassend ein Anbindungselement (21) zum Verbinden mit einem Monitor (4) und ein Stützgestell (20) zum Abstützen der Vorrichtung (1) gegen die Umgebung, wobei das Anbindungselement (21) und das Stützgestell (20) relativ zueinander schwenkbar angeordnet sind,
**dadurch gekennzeichnet, dass**
das Stützgestell (20) und das Anbindungselement (21) über ein ungleichmäßig übersetzendes Getriebe zum Bereitstellen der Schwenkbarkeit des Anbindungselements (21) relativ zum Stützgestell (20) schwenkbar miteinander verbunden sind.

2. Vorrichtung (1) gemäß einem der vorstehenden Ansprüche, wobei das ungleichmäßig übersetzende Getriebe derart ausgebildet ist, dass ein vorgegebener, relativ zu dem Anbindungselement (21) in einer festen Position gehaltener Punkt (25) bei einem Schwenken des Anbindungselements (21) über das ungleichmäßig übersetzende Getriebe relativ zum Stützgestell (21) innerhalb eines vorgegebenen Schwenkwinkels entlang einer vorgegebenen Weglänge (32) im Bereich (30) einer horizontalen Ebene (3) führbar ist.

3. Vorrichtung (1) gemäß einem der vorstehenden Ansprüche, wobei das ungleichmäßig übersetzende Getriebe derart ausgebildet ist, dass ein vorgegebener, relativ zu dem Anbindungselement (21) in einer festen Position gehaltener Punkt (25) bei einem Schwenken des Anbindungselements (21) über das Koppelgetriebe (2) relativ zum Stützgestell (20) innerhalb eines vorgegebenen Schwenkwinkels im Bereich (30) eines festen Raumpunktes gehalten ist.

4. Vorrichtung (1) gemäß einem der Ansprüche 2 oder 3, wobei das Anbindungselement (21) und/oder das ungleichmäßig übersetzende Getriebe derart ausgebildet sind, dass der Punkt (25) einem Schwerpunkt (40) eines an dem Anbindungselement (21) angebundenen Monitors (4) entspricht.

5. Vorrichtung (1) nach einem der vorstehenden Ansprüche, wobei das ungleichmäßig übersetzende Getriebe ein Koppelgetriebe (2) ist.

6. Vorrichtung (1) gemäß Anspruch 5, wobei das Koppelgetriebe (2) als viergliedriges, fünfgliedriges, sechsgliedriges, siebengliedriges oder achtgliedriges Koppelgetriebe (2) ausgebildet ist.

7. Vorrichtung (1) gemäß Anspruch 5 oder 6, wobei das Koppelgetriebe (2) in Form einer Doppelschwinge ausgebildet ist.

8. Vorrichtung (1) gemäß Anspruch 5, wobei das Koppelgetriebe (2) in Form einer Schubkurbel, bevorzugt einer Schubkurbel mit Geradführung, ausgebildet ist.

9. Vorrichtung (1) gemäß einem der Ansprüche 5 bis 8, wobei das Stützgestell (20) einem Gestell des Koppelgetriebes (2) entspricht.

10. Vorrichtung (1) gemäß einem der Ansprüche 5 bis 9, wobei das Anbindungselement (21) einer Schwinge des Koppelgetriebes (2) entspricht.

11. Vorrichtung (1) gemäß einem der Ansprüche 5 bis 10, wobei das Koppelgetriebe (2) Verbindungsglieder (22, 22', 23, 23') zwischen dem Stützgestell (20) und dem Anbindungselement (21) aufweist, wobei die Verbindungsglieder (22, 22', 23, 23') bevorzugt zumindest doppelt vorgesehen sind, wobei die Verbindungsglieder (22, 22', 23, 23') bevorzugt in Bezug auf eine Symmetrieebene (6) spiegelsymmetrisch angeordnet sind.

12. Vorrichtung (1) gemäß einem der vorstehenden Ansprüche, wobei mindestens ein Drehgelenk (24) des ungleichmäßig übersetzenden Getriebes, bevorzugt des Koppelgetriebes (2), zumindest bei einem Schwenken entgegen einer Richtung eines aus der Masse des montierten Monitors (4) schwerkraftbedingt auf das ungleichmäßig übersetzende Getriebe, bevorzugt das Koppelgetriebe (2), wirkenden Moments reibungsentkoppelt ausgebildet ist, wobei an dem Drehgelenk (24) bevorzugt eine Freilaufkupplung vorgesehen ist.

13. Vorrichtung (1) gemäß einem der vorstehenden Ansprüche, ferner umfassend einen Motor zum Unterstützen der Schwenkbewegung des Anbindungselements (21) relativ zum Stützgestell (20).

14. Vorrichtung (1) gemäß Anspruch 13, ferner umfassend ein Sensorelement zum Erfassen zumindest eines Messwertes, bevorzugt einen Kraftsensor und/oder einen Drehmomentsensor, wobei die Vorrichtung derart eingerichtet ist, dass wenn der durch das Sensorelement erfasste Messwert größer oder gleich einem vorgegebenen Schwellenwert ist, der Motor zum Unterstützen der Schwenkbewegung aktiviert wird.

15. Vorrichtung (1) gemäß Anspruch 13 oder 14, ferner umfassend einen Betätigungsschalter zum Betätigen des Motors, wobei der Betätigungsschalter eine erste Schaltstellung, welche einem ausgeschalteten Zustand des Motors entspricht, eine zweite Schaltstellung zum Betreiben des Motors in einem ersten Drehsinn und eine dritte Schaltstellung zum Betreiben des Motors in einem dem ersten Drehsinn entgegengesetzten Drehsinn aufweist.

16. Vorrichtung (100) zum Tragen eines Monitors (4), umfassend ein Anbindungselement (21) zum Verbinden mit einem Monitor (4) und ein Stützgestell (20) zum Abstützen der Vorrichtung gegen die Umgebung, wobei das Anbindungselement (21) und das Stützgestell (20) relativ zueinander schwenkbar angeordnet sind,
**dadurch gekennzeichnet, dass**
das Stützgestell (20) und das Anbindungselement (21) über mindestens ein Drehgelenk (110) zum Bereitstellen der Schwenkbarkeit des Anbindungselements (21) relativ zum Stützgestell (20) schwenkbar miteinander verbunden sind, wobei ein Motor (120), bevorzugt ein Elektromotor, zum Unterstützen der Schwenkbewegung des Anbindungselements (21) relativ zum Stützgestell (20) vorgesehen ist.

17. Vorrichtung (100) gemäß Anspruch 16, ferner umfassend ein Sensorelement zum Erfassen zumindest eines Messwertes, bevorzugt einen Kraftsensor und/oder einen Drehmomentsensor, wobei die Vorrichtung (100) derart eingerichtet ist, dass wenn der durch das Sensorelement erfasste Messwert größer oder gleich einem vorgegebenen Schwellenwert ist, der Motor (120) zum Unterstützen der Schwenkbewegung aktiviert wird.

18. Vorrichtung (100) gemäß Anspruch 16 oder 17, ferner umfassend einen Betätigungsschalter zum Betätigen des Motors (120), wobei der Betätigungsschalter eine erste Schaltstellung, welche einem ausgeschalteten Zustand des Motors (120) entspricht, eine zweite Schaltstellung zum Betreiben des Motors (120) in einem ersten Drehsinn und eine dritte Schaltstellung zum Betreiben des Motors (120) in einem dem ersten Drehsinn entgegengesetzten Drehsinn aufweist.

19. Vorrichtung (1) gemäß einem der Ansprüche 1 bis 15, wobei das Stützgestell (20) und das Anbindungselement (21) über mindestens ein Drehgelenk zum Bereitstellen der Schwenkbarkeit des Anbindungselements (21) relativ zum Stützgestell (20) schwenkbar miteinander verbunden sind, insbesondere ein Drehgelenk des ungleichmäßig übersetzenden Getriebes, wobei ein bzw. der Motor (120), bevorzugt ein Elektromotor, zum Unterstützen der Schwenkbewegung des Anbindungselements (21) relativ zum Stützgestell (20) vorgesehen ist, wobei der Motor (120) bevorzugt auf das Drehgelenk wirkt.
